# EUROPEAN PATENT APPLICATION

(11) **EP 3 406 930 A1**
(43) Date of publication of application: **28.11.2018**
(21) Application number: 18171757.0
(22) Date of filing: 11.05.2018
(51) Int. Cl.: F16F 1/38

(54) **VIBRATION ISOLATION DEVICE**

(30) Priority: 26.05.2017 JP 2017105019
(71) Applicant: Toyo Tire&Rubber Co., Ltd., Itami-shi Hyogo 664-0847 (JP)
(72) Inventor: KOBA, Hiroto, Itami-shi, Hyogo 664-0847 (JP)
(74) Representative: Prüfer & Partner mbB Patentanwälte · Rechtsanwälte

(57) **Abstract**

[Problem]

The present invention has an object to provide a vibration isolation device through which it can be restrained that abnormal sound occurs when the inner pipe relatively displaces against the outer pipe.

[Solution]

The stopper portion (32) has the communication passage (62) communicating the space (S) between the inner circumference side of the stopper portion (32) and the inner pipe (10) with outside when the inner pipe (10) relatively displaces against the outer pipe (20). Thereby, even if volume of the space (S) at the inner circumference side of the stopper portion (32) changes when the inner pipe (10) relatively displaces against the outer pipe (20), communication of air between the space (S) and outside is secured through the communication passage (62), therefore it can be restrained that atmospheric pressure within the space (S) changes. Thus, since it can be restrained that the stopper portion (32) closely contacts with the enlarged portion (13) as a suction cup, it can be restrained that abnormal sound occurs when the inner pipe (10) relatively displaces against the outer pipe (20).

## Description

### Technical Field

The present invention relates to a vibration isolation device, especially relates to a vibration isolation device through which it can be restrained that abnormal sound occurs when an inner pipe relatively displaces against an outer pipe.

### Background Art

In a suspension device and the like of a car, a bush (vibration isolation device) connecting an inner pipe and an outer pipe by a vibration isolation body made of rubber elastic body is arranged between a car body and a member of vibration side. For example, in Patent Literature 1, it is disclosed a vibration isolation device in which an end portion side in an axis direction of an inner pipe is enlarged. However, according to this conventional technology, a spring constant in the axis direction cannot be sufficiently secured.

### Citation List

### Patent Literature

Patent Literature 1: Japanese Patent Application Laid Open No. 2002-188671

### Summary of Invention

### Technical Problem

On the contrary, the present applicant conceived a constitution in which a stopper portion protruded toward an enlarged portion between an inner pipe and an outer pipe is formed in a vibration isolation body and a space is provided between an inner circumference side of the stopper portion and the inner pipe (not well-known when the present application was filed). According to this constitution, when the inner pipe relatively displaces against the outer pipe to one side in the axis direction (in the direction that enlarged potion approaches stopper portion), the stopper portion contacts with the enlarged portion and displacement of the inner pipe (outer pipe) is restrained, thereby a spring constant in the axis direction can be improved. Further, when load is added to the stopper portion from the enlarged portion based on displacement of the inner pipe (outer pipe), the stopper portion becomes easy to deform toward a space (inner side in a radial direction) of inner circumference side of the stopper portion, therefore it can be restrained that the stopper portion deforms to the outer side in a radial direction and a spring constant in the axis direction descends.

However, in case of this constitution, since communication state between a space of inner circumference side of the stopper portion and outside is closed based on that the stopper portion contacts with the enlarged portion, volume of the space of inner circumference side of the stopper portion decreases and atmospheric pressure within the space increases when the inner pipe relatively displaces against the outer pipe to one side in the axis direction while retaining the closed state. Due to increase of the atmospheric pressure, when air in the space leaks outside between the enlarged portion and the stopper portion, the stopper portion closely contacts with the enlarged portion such as a suction cup. When the inner pipe relatively displaces against the outer pipe to the other side in the axis direction while retaining the close contact state, air rapidly flows into the space of the inner circumference of the stopper portion when such close contact state between the enlarged portion and the stopper portion is separated (space of inner circumference side of the stopper portion is communicated with outside). Thereby, there arises a problem that abnormal sound occurs.

The present invention has been done to address the above mentioned problem and has an object to provide a vibration isolation device through which it can be restrained that abnormal sound occurs when the inner pipe relatively displaces against the outer pipe.

### Solution to Problem

To accomplish the above object, the vibration isolation device according to the present invention includes:
an inner pipe having an enlarged portion enlarged in a tapered shape as going to an end portion in an axis direction;
an outer pipe arranged at an outer side in a radial direction of the inner pipe with a distance between the outer pipe and the inner pipe;
a vibration isolation body made of rubber elastic body and connecting the inner pipe and the outer pipe;
wherein the vibration isolation body protrudes toward the enlarged portion between the inner pipe and the outer pipe and has a stopper portion restraining relative displacement of the inner pipe against the outer pipe, and
wherein the stopper portion has a communication passage communicating a space between an inner circumference side of the stopper portion and the inner pipe with outside when the inner pipe relatively displaces against the outer pipe.

### Advantageous Effects of Invention

According to the vibration isolation device claimed in claim 1, the stopper portion has a communication passage communicating a space between an inner circumference side of the stopper portion and the inner pipe with outside when the inner pipe relatively displaces against the outer pipe. Thereby, even if volume of the space in the inner circumference side of the stopper portion changes when the inner pipe relatively displaces against the outer pipe, communication of air between the space and outside is secured through the communication passage, therefore it can be restrained that atmospheric pressure within the space changes. Thus, since it can be restrained that the stopper portion closely contacts with the enlarged portion as a suction cup, there is an effect that it can be restrained that abnormal sound occurs when the inner pipe relatively displaces against the outer pipe.

According to the vibration isolation device claimed in claim 2, in addition to the effect realized by the vibration isolation device claimed in claim 1, following effect can be obtained. The stopper portion has a contact surface constituted as a surface contacting with the enlarged portion when the inner pipe relatively displaces against the outer pipe, and the communication passage is formed as a recess groove recessed in the contact surface. Therefore, for example, since the communication passage can be easily formed by vulcanization mold in comparison with a case that the communication passage is constituted as a through hole penetrating the stopper portion, there is an effect that production cost of the vibration isolation device can be reduced.

According to the vibration isolation device claimed in claim 3, in addition to the effect realized by the vibration isolation device claimed in claim 2, since a bottom surface of the communication passage is formed in a shape as same as an outer circumference surface of the enlarged portion, the outer circumference surface facing to the bottom surface in the axis direction, a facing clearance between the bottom surface of the communication passage and the outer circumference surface of the enlarged portion can be made constant over outside from the inner side in the radial direction in an area where the bottom surface and the outer circumference surface mutually faces in the axis direction. Thereby, while restraining sectional area of the communication passage to the minimum and securing a spring constant in the axis direction, it can be restrained that the communication passage is closed when the inner pipe relatively displaces against the outer pipe.

According to the vibration isolation device claimed in claim 4, in addition to the effect realized by the vibration isolation device claimed in claim 3, since the contact surface is formed in the shape as same as the outer circumference surface of the enlarged portion, the outer circumference surface facing to the contact surface in the axis direction, a separation size in the axis direction between the bottom surface of the communication passage and the contact surface becomes constant over the outer side in the radial direction from the space side. Thereby, in a case that the inner pipe displaces to the one side in the axis direction and the stopper portion deforms toward the one side in the axis direction, compression allowance of the stopper portion in the axis direction to the bottom surface side of the communication passage from the contact surface can be constant over the outer side in the radial direction from the space side. Therefore, since rubber amount penetrating in the communication passage according to deformation of the stopper portion can be made constant over the outer side in the radial direction from the space side, there is an effect that closure of the communication passage due to deformation of the stopper portion can be restrained (see paragraph 0072).

According to the vibration isolation device claimed in claim 5, in addition to the effect realized by the vibration isolation device claimed in claim 2, since the communication passage has a pair of side walls extending toward the enlarged portion from the bottom surface and oppositely arranged in a circumference direction, and a facing clearance of the pair of side walls is formed wider as going to a side of the enlarged portion, even if the stopper portion deforms so as to spread in the circumference direction based on that load is added to the stopper portion from the enlarged portion, it can be restrained that the pair of side walls mutually contact. Therefore, there is an effect that it can be restrained that the communication passage is closed when the inner pipe relatively displaces against the outer pipe.

According to the vibration isolation device claimed in claim 6, in addition to the effect realized by the vibration isolation device claimed in claim 2, since the stopper portion is provided at a position facing to an outer circumference surface of the inner pipe and has a recess portion recessed toward an outer side of the inner pipe in the radial direction, the stopper portion deforms so as to collapse toward the inner side in the radial direction while setting the recess portion of the stopper portion as a starting point when force is added to the stopper portion from the enlarged portion. In this case, since the facing clearance between the bottom surface of the communication passage and the outer circumference surface of the enlarged portion is formed so as to become gradually wider over the outer side in the radial direction from the space side, there is an effect that it can be restrained that the communication passage is closed even if the stopper portion deforms so as to collapse toward the inner side in the radial direction (see paragraph 0085).

According to the vibration isolation device claimed in claim 7, in addition to the effect realized by the vibration isolation device claimed in any of claims 1 to 6, since a plurality of the communication passages are formed at positions mutually separated in the circumference direction, for example, even if the inner pipe deforms to the prying direction and one communication passage is closed, there is an effect that it can be retained communication state between the space at the inner circumference side of the stopper portion and outside through the other communication passages.

### Brief Description of Drawings

Fig. 1 is a sectional view of the vibration isolation device according to a first embodiment of the present invention.
Fig. 2 is a partially enlarged view of the vibration isolation device, in which a part shown by II in Fig. 1 is enlarged and indicated.
Fig. 3 is a sectional view of the vibration isolation device, in which it is indicated a state that the inner pipe is enlarged.
Fig. 4 is a sectional view of the vibration isolation device according to a second embodiment.
Fig. 5 is a sectional view of the vibration isolation device according to a third embodiment.
Fig. 6 is a partially enlarged view of the vibration isolation device enlarging and showing a portion indicated by VI in Fig. 5.
Fig. 7A is a top view of the vibration isolation device when seeing in a direction of arrow VIIA in Fig. 5 and Fig. 7B is a partially enlarged view of the vibration isolation device when seeing in a direction of arrow VIIb in Fig. 7A.
Fig. 8A is a partially enlarged view of the vibration isolation device according to a fourth embodiment and Fig. 8B is a partially enlarged view of the vibration isolation device showing a state that the inner pipe relatively displaces to one side in the axis direction against the outer pipe from a state shown in Fig. 8A.

### Description of Embodiments

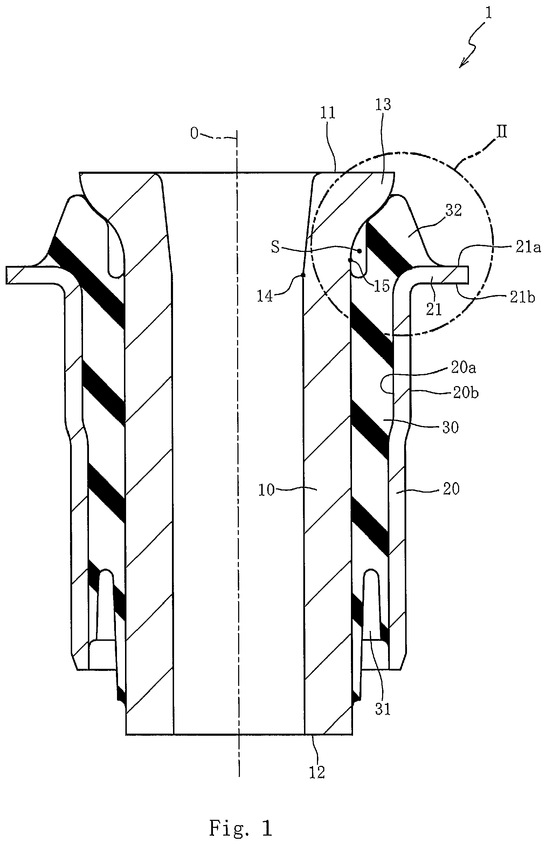

Hereinafter, preferred embodiments embodying the present invention will be described in detail with reference to drawings. First, with reference to Fig. 1, an outline construction of the vibration isolation device 1 according to a first embodiment of the present invention will be described. Fig. 1 is a sectional view of the vibration isolation device 1 according to the first embodiment of the present invention. Here, in Fig. 1, it is indicated a sectional view for an axis direction of the vibration isolation device 1 including a central axis O.

As shown in Fig. 1, the vibration isolation device 1 is a bush arranged in a suspension device of a car. The vibration isolation device 1 has an inner pipe 10, an outer pipe 20 coaxially arranged so as to separate from an outer side in a radial direction of the inner pipe 10 with a distance therebetween and a vibration isolation body 30 made of a rubber elastic body, the vibration isolation body 30 mutually connecting the inner pipe 10 and the outer pipe 20. In the vibration isolation device 1, the inner pipe 10 and the outer pipe 20 are respectively connected to different partner members (not shown), thereby the vibration isolation device 1 connects both partner members for vibration isolation.

The inner pipe 10 is a member cylindrically formed from rigid materials such as steel materials or aluminum alloy. In the inner pipe 10, a shaft-like member (not shown) such as a bolt is inserted and the shaft-like member is connected to the partner member (not shown), thereby the inner pipe 10 is attached to the partner member. In the inner pipe 10, an end surface in the axis direction positioned at one side (upper side in Fig. 1) becomes a first end surface 11 and an end surface in the axis direction positioned at the other side (under side in Fig. 1) opposite to the first end surface 11 becomes a second end surface 12. The inner pipe 10 has an enlarged portion 13 along the radial direction which is enlarged in a tapered shape along the radial direction as going to the first end surface 11 (end portion in the axis direction of the inner pipe 10).

The enlarged portion 13 is a portion which is plastically deformed from the first end surface 11 of the inner pipe 10 to a predetermined position. In the enlarged portion 13, an inner peripheral surface and an outer peripheral surface are enlarged in a tapered shape as going to the first end surface 11 and thickness (dimension in the radial direction) is made larger. Since the area of the first end surface 11 can be made large, surface pressure received on the first end surface 11 by fastening to the partner member can be made small. As a result, cave-in of the partner member and buckle of the first end surface 11 side in the inner pipe 10 can be restrained.

The inner peripheral surface of the enlarged portion 13 is slanted while retaining an angle with the central axis O to a substantially constant angle so that the inner surface is separated from the central axis O as going from an inner peripheral staring point 14 toward the first end surface 11. The outer peripheral surface of the enlarged portion 13 is slanted so as to separate from the central axis O as going from an outer peripheral starting point 15 toward the first end surface 11.

The outer pipe 20 is a member made of rigid material such as steel material or aluminum alloy so that the thickness thereof (dimension in the radial direction) becomes a substantially constant in a cylindrical shape. The outer pipe 20 is attached to the partner member (not shown) by press-fitting into the partner member. The outer pipe 20 is formed so that length thereof becomes slightly shorter than that of the inner pipe 10 and a flection portion 21 is formed by bending the axis direction end portion of the first end surface 11 side (side of the enlarged portion 13) at substantially right angle against the central axis O toward the outer side in the radial direction. Here, in the first embodiment, description will be done by defining the surface of the inner pipe 10 side in the portion (portion of the outer pipe 20 except for the flection portion 21) extending to the axis direction of the outer pipe 20 as an inner peripheral surface 20a, the opposite surface to the inner peripheral surface 20a as an outer peripheral surface 20b, the surface continuing to the inner peripheral surface 20a of the flection portion 21 as an axis direction end surface 21a and the surface continuing to the outer peripheral surface 20b of the flection portion 21 as the outer peripheral surface 21b.

The vibration isolation body 30 is a member with a substantially cylindrical shape arranged between the inner pipe 10 and the outer pipe 20, and in the first embodiment, the vibration isolation body 30 is formed by vulcanizing formation of rubber material. In the vibration isolation body 30, the inner peripheral surface thereof is adhered to the second end surface 12 side of the outer peripheral surface of the inner pipe 10 than the outer peripheral starting point 15 by vulcanizing adhesion, and the outer peripheral surface is adhered to the inner peripheral surface 20a of the outer pipe 20 and the axis direction end surface 21a by vulcanizing adhesion. Thereby, the vibration isolation body 30 integrally connects both the inner pipe 10 and the outer pipe 20. Further, since the inner peripheral surface of the vibration isolation body 30 is adhered to the second end surface 12 side of the outer peripheral surface of the inner pipe 10 than the outer peripheral starting point 15, the vibration isolation body 30 and the enlarged portion 13 can be mutually connected by non-adhesion.

In the vibration isolation body 30, it is provided an annular recess 31, which is recessed in the axis direction so as to make one lap in the peripheral direction and formed on the axis direction end surface of the second end surface 12 side, and it is provided an annular stopper portion 32 protruded toward the enlarged portion 13 from the flection portion 21 between the inner pipe 10 and the outer pipe 20. By forming the recess 31, adhesion area among the vibration isolation body 30 and the inner pipe 10, the outer pipe 20 can be retained while lowering the spring constant in the radial direction.

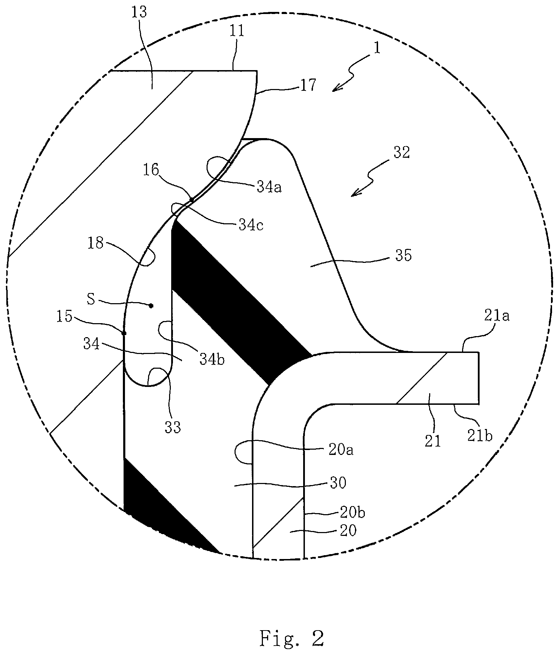

Next, with reference to Fig. 2, the detailed construction of the enlarged portion 13 and the stopper portion 32 will be described. Fig. 2 is a partially enlarged view of the vibration isolation device 1, in which a part shown by II in Fig. 1 is enlarged. As shown in Fig. 2, the enlarged portion 13 is protruded in the outer radial direction than the inner peripheral surface 20a of the outer pipe 20. The outer peripheral surface of the enlarged portion 13 is curved so as to have a flection point 16. The outer peripheral surface of the enlarged portion 13 is shaped so that the first end surface 11 side than the flection point 16 is made into an convex surface 17 curved in a convex shape and the second end surface 12 side than the flection point 16 (see Fig. 1) is made into a concave surface 18 curved in a concave shape.

The stopper portion 32 is a part restraining relative deformation in the axis direction of the inner pipe 10 and the outer pipe 20 by force added from the enlarged portion 13. The stopper portion 32 is arranged so that a part of the stopper portion 32 is positioned at an inner side in the radial direction than the flection point 16 and a predetermined space S is formed in a clearance to the inner pipe 10 under a non-load state. A part of end surface of the first end surface 11 side in the vibration isolation body 30, becoming a bottom of the second end surface 12 side in the space S, is defined as a bottom portion 33 of the space S. The bottom portion 33 is positioned at the second end surface 12 side (see Fig. 1) than the axis direction end surface 21a of the flection portion 21 (outer pipe 20) in the axis direction and at first end surface 11 side than the outer peripheral surface 21b of the flection portion 21 (outer pipe 20).

Here, in the first embodiment, a part of the first end surface 11 side than the bottom portion 33 in the axis direction is defined as the stopper portion 32. Further, it will be conceivable that the bottom portion 33 is set so that the bottom portion 33 is positioned at the first end surface 11 side than the axis direction end surface 21a of the flection portion 21. In this case, a part of the first end surface 11 side than the axis direction end surface 21a of the flection portion 21 in the axis direction is defined as the stopper portion 32.

The stopper portion 32 has an inner side portion 34 positioned at the inner side in the radial direction than the inner peripheral surface 20a of the outer pipe 20 and an outer side portion 35 positioned at the outer side in the radial direction than the inner peripheral surface 20a of the outer pipe 20 and positioned in the axis direction of the flection portion 21. The inner side portion 34 is a part protruding toward the enlarged portion 13 in a clearance between the inner pipe 10 and the outer pipe 20. The inner side portion 34 is constructed from a portion the inner peripheral surface of which is parallel with the central axis O and a portion which is enlarged in a tapered shape along the radial direction toward the first end surface 11. The inner surface of the inner side portion 34 has a slanted surface 34a facing the convex surface 17 in the axis direction, a parallel surface 34b parallel with the central axis O (see Fig. 1) of the inner pipe 10 and a connection surface 34c smoothly connecting the slanted surface 34a and the parallel surface 34b.

The slanted surface 34a faces to the convex surface 17 while separating from the convex surface 17 with a substantially constant distance therebetween in the axis direction under the non-load state. The slanted surface 34a is positioned at the outer side of the enlarged portion 13 in the radial direction under the non-load state and is set at the first end surface 11 side than the flection portion 21 in the axis direction. The slanted surface 34a is formed in a shape corresponding to a shape of the convex surface 17, that is, is formed in a curved concave shape toward the convex surface 17. Here, it is not limited to the case that the slanted surface 34a and the convex surface 17 are retained in a non-contact state under the non-load state, further it may be possible that the slanted surface 34a and the concave surface 17 are mutually contacted. In this case, it may be possible that the stopper portion 32 is pre-compressed in the axis direction by the enlarged portion 13.

The parallel surface 34b faces to the inner pipe 10 while providing the space S in a clearance to the outer peripheral surface of the inner pipe 10 under the non-load state. The connection surface 34c faces to the concave surface 18 with a distance therebetween under the non-load state and is formed into a convex curved shape toward the concave surface 18. The connection portion of the slanted surface 34a and the connection surface 34c (flection point) and the position of the flection point 16 substantially coincide with each other in the radial direction. Here, it may be possible that the connection portion of the slanted surface 34a and the connection surface 34c (flection point) and the position of the flection point 16 are mutually shifted.

The outer side portion 35 is a part to thicken the stopper portion 32 in the radial direction and the outer peripheral surface thereof is enlarged in a tapered shape as going toward the flection portion 21. The outer side portion 35 is formed so as to extend to the substantial center portion in the radial direction of the flection portion 21 from the inner side portion 34. Here, the thickness in the radial direction of the stopper portion 32 may be voluntarily changed and when the stopper portion32 is provided to the top (end of outer side in the radial direction) of the outer side portion 35, the stopper portion 32 becomes thickest in the radial direction.

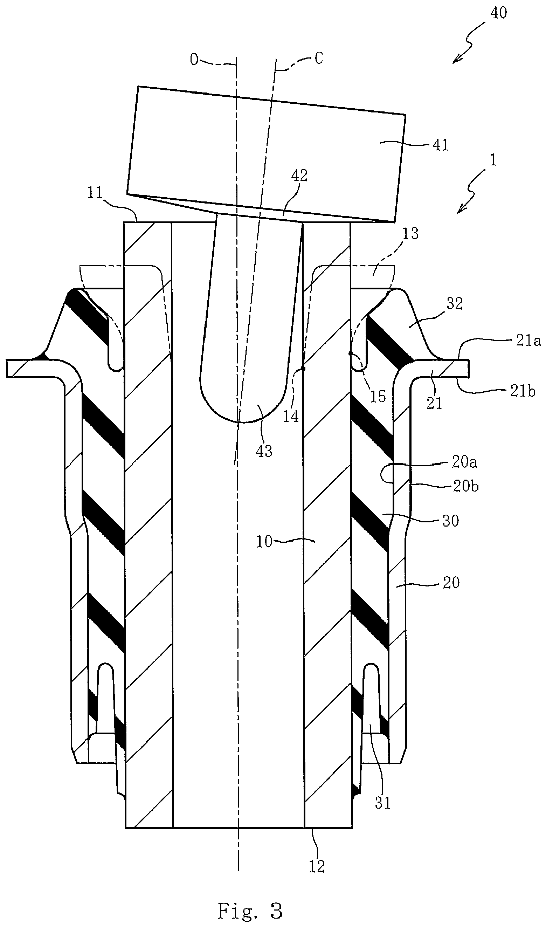

Next, producing method of the vibration isolation device 1 will be described with reference to Fig. 3. Fig. 3 is a sectional view of the vibration isolation device 1, in which it is indicated a state that the inner pipe 10 is enlarged. First, the inner pipe 10 and the outer pipe 20 are set in a vulcanization-mold (not shown) so that the outer pipe 20 is co-axially positioned with the inner pipe 10 while separating a distance from the outer side of the inner pipe 10 in the radial direction of the inner pipe 10. The end portion of the first end surface 11 side in the inner pipe 10 is fitted in the inner side of cylindrical body of the vulcanization-mold. The vibration isolation body 30 is vulcanized and formed so as to connect the outer peripheral surface of the inner pipe 10, the inner peripheral surface 20a of the outer pipe 20 and the end surface 21a in the axis direction, thereby both the inner pipe 10 and the outer pipe 20 are unified through the vibration isolation body 30

Next, the inner pipe 10, the outer pipe 20 and the vibration isolation body 30 are taken out from the vulcanization-mold. As shown in Fig. 3, in the inner pipe 10 right after taken out from the vulcanization-mold, outlines of the inner peripheral surface and the outer peripheral surface in a sectional plane including the central axis O from the first end surface 11 to the second end surface 12 are straight lines, thus are parallel with the central axis O. Since the parallel surface 34b of the stopper portion 32 is parallel with the central axis O, the outer peripheral surface of the inner pipe 10 and the parallel surface 34b are parallel with each other when taken out from the vulcanization-mold. Therefore, the inner pipe 10, the outer pipe 20 and the vibration isolation body 30 can be easily taken out from the vulcanization-mold. Further, in order that the inner pipe 10 and the stopper portion 32 (vibration isolation body 30) are retained in the non-adhesion state, the first end surface 11 side of the inner pipe 10 is fitted in the cylindrical body (not shown), as a result, a clearance corresponding to the thickness of the cylindrical body occurs between the inner pipe 10 and the stopper portion 32 when taken out from the vulcanization-mold.

Next, the first end surface 11 side of the inner pipe 10 is plastically deformed by using a press tool 40, thereby the enlarged portion 13 is formed. The press tool 40 is a tool made of steel material with high strength than the inner pipe 10 and formed in axis symmetry around a central axis C. In the press tool 40, a conical press surface 42 is formed at one side end of a cylindrical toll body 41 and a protrusion 43 with a circular sectional plane is formed at a center of the press surface 42. The protrusion 43 has a semispherical top and an outer surface to the top is formed parallel with the central axis C.

The protrusion 43 is inserted in the inner pipe 10 from the first end surface 11 side and the press toll 40 is rotated around the center corresponding to the central axis O while pressing the first end surface 11 from the axis direction by the press surface 42 so that the press surface 42 and the first end surface 11 become parallel with each other. Thereby, the first end surface 11 is wholly pressed in the axis direction, as a result, the first end surface 11 side of the inner pipe 10 is plastically deformed. Since the inner peripheral surface of the inner pipe 10 is pressed toward the outer side in the radial direction by the protrusion 43, both the inner peripheral surface and the outer peripheral surface of the inner pipe 10 are enlarged in the radial direction, thus the enlarged portion 13 is formed. Thereby, the clearance between the inner pipe 10 and the stopper portion 32 becomes the space S (see Fig. 1). According to the above producing method of the vibration isolation device 1, the enlarged portion 13 is formed after the vibration isolation body 30 is formed by the vulcanization formation, thus die-out work after vulcanization-formation can be easily done.

When the enlarged portion 13 is formed, a plastic deformation quantity of the inner pipe 10 by the press tool 40 is set so that the outer peripheral starting point 15 from which enlargement of the outer peripheral surface in the inner pipe 10 is started is positioned at first end surface 11 side than a portion where the inner pipe 10 and the vibration isolation body 30 are mutually connected. Thereby, the enlarged portion 13 and the vibration isolation body 30 can be retained in the non-adhesion state.

When the enlarged portion 13 and the vibration isolation body 30 are mutually connected, stress is worked on the adhesion layer of the vibration isolation body 30 when the inner pipe 10 is enlarged, thereby there is fear that cracks occur in the adhesion layer of the vibration isolation body 30. Contrarily, in the embodiment, the enlarged portion 13 and the vibration isolation body 30 retain in the non-adhesion state based on the space S (see Fig. 1), thereby stress working on the adhesion layer of the vibration isolation body 30 when the inner pipe 10 is enlarged can be lowered.

According to the above vibration isolation device 1, the enlarged portion 13 and the stopper portion 32 are contacted when load in the axis direction is added to the inner pipe 10 or the outer pipe 20. Based on that force is added to the stopper portion 32 from the enlarged portion 13, relative deformation in the axis direction of the inner pipe 10 and the outer pipe 20 is restrained. Accordingly, the spring constant in the axis direction can be increased by adding force to the stopper portion 32 from the enlarged portion 13.

In case that the slanted surface 34a is positioned at the second end surface 12 side than the flection portion 21 in the axis direction, since a free length of the stopper portion 32 depends on the distance in the radial direction to the inner peripheral surface 20a of the outer pipe 20 from the slanted surface 34a, the free length of the stopper portion 32 cannot be retained. However, in the first embodiment, since the slanted surface 34a is positioned at the first end surface 11 side than the flection portion 21 in the axis direction, the free length of the stopper portion 32 can be retained corresponding to a distance to the slanted surface 34a from the flection portion 21. As a result, soft spring characteristic by the stopper portion 32 can be realized.

Since the stopper portion 32 is extended to the flection portion 21 at the outer side in the radial direction, that is, the stopper portion 32 has the outer side portion 35, the stopper portion 32 can be thickened in the radial direction by the flection portion 21. Further, since the stopper portion 32, to which force is added from the outer peripheral surface with a tapered shape of the enlarged portion 13, can be restrained to deform toward the outer side in the radial direction, therefore it can be restrained that the spring constant in the axis direction is lowered due to that the stopper portion 32 deforms to the outer side in the radial direction. Here, as the stopper portion 32 is set thicker in the radial direction, it can be restrained that the spring constant in the axis direction is lowered.

Since the outer peripheral surface of the outer side portion 35 is enlarged in a tapered shape along the radial direction as the outer peripheral surface is going toward the flection portion 21, the outer side portion 35 can securely catch force added from the enlarged portion 13. Further, since the stopper portion 32 can be made difficult to deform to the outer side in the radial direction, it can be restrained that the spring constant in the axis direction is lowered due to that the stopper portion 32 deforms to the outer side in the radial direction.

Since the space S is formed between the inner pipe 10 and the stopper portion 32, deformation to the inner side in the radial direction of the stopper portion 32 can be permitted by the space S even if force is added to the stopper portion 32 from the enlarged portion 13. Thereby, it can be restrained that the spring constant in the axis direction is lowered due to that the stopper portion 32 deforms to the outer side in the radial direction.

Since the bottom portion 33 is positioned at the second end surface 12 side than the axis direction end surface 21a of the flection portion 21 in the axis direction, the inner side portion 34 of the second end surface 12 side than the axis direction end surface 21a of the flection portion 21 in the axis direction can be easily deformed based on the space S. Since the inner side portion 34 can be more easily deformed than the outer side portion 35 of the stopper portion 32, the stopper portion 32 to which force is added from the enlarged portion 13 can be made difficult to deform to the outer side in the radial direction. As a result, it can be restrained that the spring constant in the axis direction is lowered due to that the stopper portion 32 is deformed to the outer side in the radial direction.

Since the slanted surface 34a is formed into a shape corresponding to the shape of the outer peripheral surface (convex surface 17) in the axis direction of the enlarged portion 13, a pressure reception area of the stopper portion 32 when force is added to the slanted surface 34a can be retained. Further, since a rise in the load-bend curve when load in the axis direction is added to the slanted surface 34a can be made steep, the spring constant in the axis direction can be further increased.

Since force is added to the slanted surface 34a curved in a concave state toward the convex surface 17 from the convex surface 17 curved in a convex state toward the slanted surface 34a, the convex surface 17 and the slanted surface 34a can be made difficult to slip off with each other. As a result, it can be restrained that the spring constant in the axis direction is lowered due to that the convex surface 17 and the slanted surface 34a slip off with each other in the radial direction.

Further, since the connection portion (flection point) of the concave slanted surface 34a and the convex connection surface 34c and the flection point 16 which is the connection portion of the convex surface 17 and the concave surface 18 substantially coincide with each other in the radial direction, the slanted surface 34a and the convex surface 17 can be very closely contacted. Thereby, since the convex surface 17 and the slanted surface 34a can be further made difficult to slip off, it can be further restrained that the spring constant in the axis direction is lowered due to that the convex surface 17 and the slanted surface 34a slip off in the radial direction.

Since a part of the stopper portion 32 is positioned at the inner side in the radial direction than the flection point 16, when force is added to the stopper portion 32 from the enlarged portion 13, the concave surface 18 and both the connection surface 34c and the parallel surface 34b gradually contact while the connection surface 34c and the parallel surface 34b deform into a shape along the concave surface 18 curved in a concave shape. When the concave surface 18 and both the connection surface 34c and parallel surface 34b mutually contact, since the enlarged portion 13 and the stopper portion 32 can be further made difficult to slip off, it can be further restrained that the spring constant is lowered in the axis direction due to that the enlarged portion 13 and the stopper portion 32 slip off in the radial direction.

In case that the inner peripheral surface of the stopper portion 32 is enlarged (parallel surface 34b does not exist) over the axis direction as going toward the first end surface 11, when volume of the stopper portion 32 is retained in order to retain the spring constant in the axis direction, the cylindrical body of the vulcanization-mold, which is fitted to the first end surface 11 side of the inner pipe 10 in the vulcanization formation, becomes thinner as going to the top thereof, thus there is fear that strength of the cylindrical body cannot be retained. Further, contrary to the first embodiment, in case that a part of the inner peripheral surface of the stopper portion 32 protrudes to the inner side in the radial direction (contracted along the radial direction as going to the first end surface 11), a part of the cylindrical body of the vulcanization-mold fitted to the first end surface 11 side of the inner pipe 10 in the vulcanization formation becomes thin. Thus, there is fear that strength of the cylindrical body cannot be retained. On the contrary to the first embodiment, in case that a part of the inner peripheral surface of the stopper portion 32 is recessed to the outer side in the radial direction (contracted along the radial direction as going to the first end surface 11), the spring constant of the stopper portion 32 in the axis direction is lowered.

In contrast, in the first embodiment, since the stopper portion 32 has the parallel surface 34b parallel with the center axis O, thickness of the cylindrical body of the vulcanization-mold fitted to the first end surface 11 side of the inner pipe 10 in the vulcanization formation can be retained while retaining the spring constant of the stopper portion 32 in the axis direction. Therefore, strength of the cylindrical body of the vulcanization-mold can be retained while retaining the spring constant of the stopper portion 32 in the axis direction.

Since the slanted surface 34a is positioned at the outer side in the radial direction of the enlarged portion 13 under the non-load state, the stopper portion 32 and the enlarged portion 13 can be brought close with each other. As a result, a relative displacement quantity of the inner pipe 10 and the outer pipe 20 in the axis direction can be reduced and a relative displacement in both the radial direction of the inner pipe 10 and the outer pipe 20 and a pry direction can be restrained.

Since the enlarged portion 13 is protruded toward the outer side in the radial direction than the inner peripheral surface 20a of the outer pipe 20, that is, the enlarged portion 13 and the outer pipe 20 are superimposed when seen from the axis direction. Thereby, when relatively large load is added to the stopper portion 32 from the enlarged portion 13, relative displacement of the inner pipe 10 and the outer pipe 20 in the axis direction can be securely restrained through the stopper portion 32 at a part of which the enlarged portion 13 and the outer pipe 20 are superimposed in the axis direction.

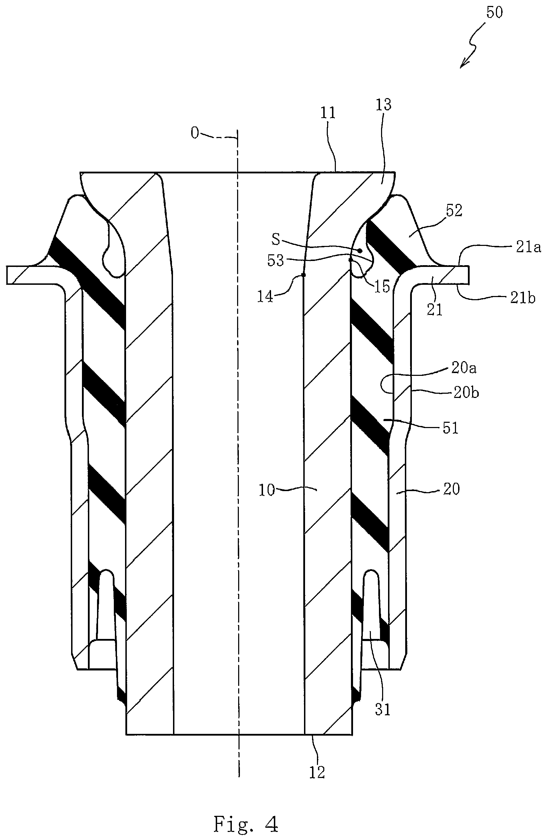

Next, a second embodiment will be described with reference to Fig. 4. In the first embodiment, it is described a case that the inner peripheral surface of the stopper portion 32 is constructed from a part parallel with the central axis O and a part enlarged in a tapered shape along the radial direction toward the first end surface 11. On the contrary, in the second embodiment, it will be described a case that a part of the inner peripheral surface of the stopper portion 52 has a recess portion 53 recessed toward the outer side in the radial direction. Here, as for the same elements and members in the first embodiment, the same references are attached thereto and explanation thereof will be omitted.

Fig. 4 is a sectional view of the vibration isolation device 50 according to the second embodiment. As shown in Fig. 4, the vibration isolation device 50 has the inner pipe 10, the outer pipe 20 coaxially arranged so as to separate from an outer side in a radial direction of the inner pipe 10 with a distance therebetween and a vibration isolation body 51 made of rubber elastic material which connects the inner pipe 10 and the outer pipe 20.

The vibration isolation body 51 is a substantially cylindrical member provided between the inner pipe 10 and the outer pipe 20. In the second embodiment, the vibration isolation body 51 is formed by vulcanization formation of rubber material. The inner peripheral surface of the vibration isolation body 51 is adhered to the second end surface 12 side than the outer peripheral starting point 15 in the outer peripheral surface of the inner pipe 10 by vulcanization-adhesion and the outer peripheral surface of the vibration isolation body 51 is adhered to the inner peripheral surface 20a of the outer pipe 20 and the axis direction end surface 21a of the flection portion 21 by vulcanization-adhesion.

In the vibration isolation body 51, it is provided an annular stopper portion 52 protruded between the inner pipe 10 and the outer pipe 20 and toward the enlarged portion 13 from the flection portion 21. The stopper portion 52 is a part which restrains relative displacement of the inner pipe 10 and the outer pipe 20 in the axis direction by adding force from the enlarged portion 13. The stopper portion 52 is arranged so that a predetermined space S is provided in a clearance to the inner pipe 10 under non-load state.

The stopper portion 52 has a recess portion 53 on the inner peripheral surface thereof, the recess portion 53 being recessed toward the outer side in the radial direction. The recess portion 53 is formed so as to do one lap around the inner peripheral surface of the stopper portion 52 at the position facing the outer peripheral surface of the inner pipe 10 with the space S therebetween. In case that the vibration isolation device 50 is taken out from the vulcanization-mold, since a part of the vulcanization-mold is entered in the recess portion 53, the vibration isolation device 50 is taken out from the vulcanization-mold while elastically deforming the stopper portion 52. Thus, depth of the recess portion 53 (dimension in the radial direction) is set so that the vibration isolation device 50 is easily taken out from the vulcanization-mold.

Since the spring constant in the axis direction of the stopper portion 52 of a part where the recess portion 53 is formed is reduced, it can be realized that the stopper portion 52 to which force is added from the enlarged portion 13 is made difficult to deform to the outer side in the radial direction based on the recess portion 53. Thereby, it can be restrained that spring constant in the axis direction is lowered due to that the stopper portion 52 is deformed to the outer side in the radial direction. Here, as depth of the recess portion 53 is set larger, the stopper portion 52 can be made difficult to deform to the outer side in the radial direction, therefore it can be further restrained that the spring constant in the axis direction is lowered due to that the stopper portion 52 is deformed to the outer side in the radial direction.

Since a rigid body to restrain deformation of the stopper portion 52 to the outer side in the radial direction does not exist in the stopper portion 52 corresponding to a part protruded to the first end surface 11 side than the flection portion 21 in the axis direction, the stopper portion 52 is easy to deform to the outer side in the radial direction. However, since at least a part of the recess portion 53 is formed to the first end surface 11 side than the flection portion 21 in the axis direction, the stopper portion 52 can be made difficult to deform to the outer side in the radial direction based on the recess portion 53. As a result, it can be further restrained that the spring constant in the axis direction is lowered due to that the stopper portion 52 deforms to the outer side in the radial direction.

Since the recess portion 53 is formed near the second end surface 12 of the stopper portion 52, the stopper portion 52 elastically deforming by force added to the stopper portion 52 from the enlarged portion 13 can be sneaked around in the space S of the first end surface 11 side than the recess portion 53 in the axis direction. Since the stopper portion 52 can be made difficult to deform to the outer side in the radial direction by the recess portion 53 and the space S can be made small by the sneaked stopper portion 52, the spring constant in the axis direction can be improved while restraining that the spring constant in the axis direction is lowered due to that the stopper portion 52 deforms to the outer side in the radial direction.

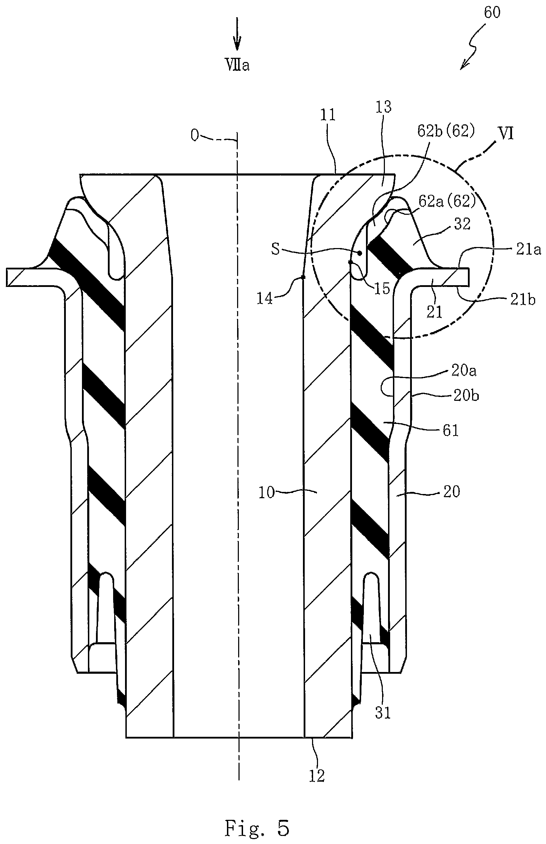

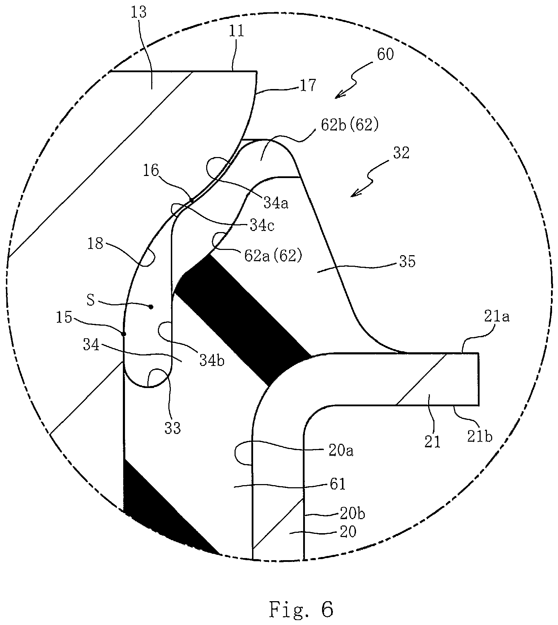

Next, a third embodiment will be described with reference to Figs. 5 and 6. In the first embodiment, it is described a case that the slanted surface 34a and the connection surface 34c with a shape corresponding to the convex surface 17 and the concave surface 18 are formed over the entire circumference in the circumference direction of the stopper portion 32. On the contrary, in the third embodiment, it will be described a case that a communication passage 62, which is recessed in a direction separate from the convex surface 17 and the concave surface 18 than the slanted surface 34a and the connection surface 34c, is formed in the stopper portion 32. Here, as for the same portions as those in the first embodiment, the same references are attached and detailed description thereof will be omitted.

Fig. 5 is a sectional view of a vibration isolation device 60 in the third embodiment. Fig. 6 is a partially enlarged view of the vibration isolation device 60 enlarging and showing a portion indicated by VI in Fig. 5.

As shown in Figs. 5 and 6, the vibration isolation device 60 is constituted from rubber elastic body and has a vibration isolation body 61 connecting the inner pipe 10 and the outer pipe 20. In the stopper portion 32 of the vibration isolation body 61, a communication passage 62 is formed.

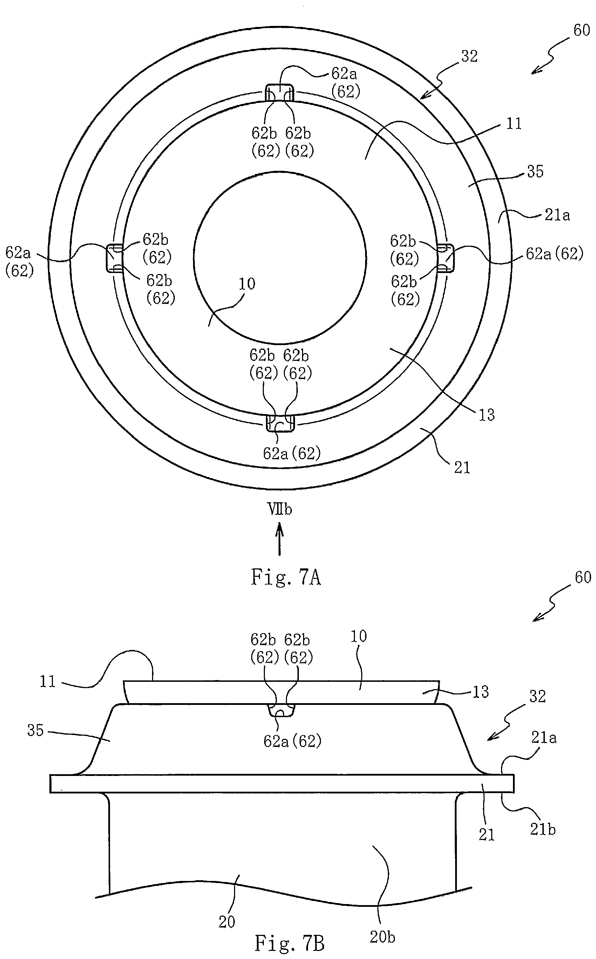

The communication passage 62 possesses a bottom surface 62a oppositely arranged against the convex surface 17 and the concave surface 18 with a predetermined clearance therebetween and a pair of side walls 62b oppositely arranged in the circumference direction (vertical direction to sheet plane of Figs. 5 and 6) and constituted as a plane extending toward the convex surface 17 and the concave surface 18 from the bottom surface 62a. The communication passage 62 is constituted as a concave groove with a trapezoid sectional shape in the slanted surface 34a and the connection surface 34c (as for trapezoid shape, see Fig. 7B).

Here, as in the first embodiment, in a constitutional case that the slanted surface 34a and the connection surface 34c with a shape corresponding to the convex surface 17 and the concave surface 18 are formed over the entire circumference in the circumference direction of the stopper portion 32, when the inner pipe 10 relatively displaces against the outer pipe 20 to one side in the axis direction (lower side of Figs. 5 and 6), the convex surface 17 and the concave surface 18 closely contact with the slanted surface 34a and the connection surface 34c, thereby communication state between the space S and outside is closed. Therefore, when the inner pipe 10 further displaces to the one side in the axis direction from such closed state, the stopper portion 32 closely contacts with the convex surface 17 and the concave surface 18 (enlarged portion 13) as a suction cup, thereby there is a problem that abnormal sound occurs when the close contact state is separated.

On the contrary, in the present embodiment, based on that the communication passage 62 is formed in the stopper portion 32, the space S is communicated with outside through the communication passage 62. Thereby, even though volume of the space S changes when the inner pipe 10 relatively displaces against the outer pipe 20 to the one side in the axis direction, communication of air between the space S and outside is secured by the communication passage 62, therefore it can be restrained that atmospheric pressure within the space S changes.

Therefore, even though the inner pipe 10 relatively displaces against the outer pipe 20 to the one side in the axis direction under a state that the convex surface 17 and the concave surface 18 closely contact with the slanted surface 34a and the connection surface 34c, it can be restrained that the slanted surface 34a and the connection surface 34c (stopper portion 32) closely contact with the convex surface 17 and the concave surface 18 (enlarged portion 13) such as a suction cup, therefore it can be restrained that abnormal sound occurs when the inner pipe 10 relatively displaces against the outer pipe 20 to the other side in the axis direction (upper side of Figs. 5 and 6) .

Here, provisionally, in a case that load more than expected is added to the stopper portion 32 when the inner pipe 10 relatively displaces against the outer pipe 20 to the one side in the axis direction, thereby the communication passage 62 is closed, atmospheric pressure within the space S increases. Further, in a case that air leaks out from the space S to outside due to increase of the atmospheric pressure, the stopper portion 32 closely contacts with the convex surface 17 and the concave surface 18 (enlarged portion 13) such as a suction cup, similarly to the first embodiment. However, in the present embodiment, since the communication passage 62 is formed in the stopper portion 32, air can be promptly flown into the space S through the communication passage 62 when the inner pipe 10 displaces to the other side in the axis direction from the above close contact state.

That is, as in the first embodiment, in a case that the slanted surface 34a and the connection surface 34c (stopper portion 32 where communication passage 62 is not formed) closely contact over the entire circumference of the convex surface 17 and the concave surface 18 (enlarged portion 13) as a suction cup, when the inner pipe 10 displaces to the other side in the axis direction from the close contact state, entire of the convex surface 17 and the concave surface 18 is separated from the slanted surface 34a and the connection surface 34c all at once. Thereby, air promptly flows into the space S and loud abnormal sound occurs.

Meanwhile, in the present embodiment, in a case that the inner pipe 10 displaces to the other side in the axis direction from the close contact state of the stopper portion 32 and the enlarged portion 13, air is promptly flown into the space S through the communication passage 62, thereby it can be restrained that entire of the convex surface 17 and the concave surface 18 are separated from the slanted surface 34a and the connection surface 34c all at once. That is, since it can be restrained that air promptly flows into the space S, occurrence of abnormal sound can be restrained.

Further, for example, in a case that the communication passage 62 is constituted as a through hole penetrating the stopper portion 32, mold shape for vulcanization molding becomes complex when the communication passage 62 is formed by vulcanization molding. Further, in a case that the communication passage 62 is penetrated and formed in the stopper portion 32 after vulcanization molding, a number of production process increases. Therefore, production cost of the vibration isolation device 60 increases.

On the contrary, in the present embodiment, since the communication passage 62 is formed as a concave groove recessed in the slanted surface 34a and the connection surface 34c, for example, the communication passage 62 can be easily formed by vulcanization molding, in comparison with a case that the communication passage 62 is constituted as a through hole penetrating the stopper portion 32. Thereby, production cost of the vibration isolation device 60 can be reduced.

Here, to restrain that the communication passage 62 is closed when the stopper portion 32 is deformed by receiving load from the convex surface 17 and the concave surface 18, it is necessary to form the bottom surface 62a in the axis direction at a position separated with a predetermined distance from the convex surface 17 and the concave surface 18. In this case, for example, when the bottom surface 62a opposite to the convex surface 17 and the concave surface 18 in the axis direction is formed into a shape different from the convex surface 17 and the concave surface 18 (for example, linear shape in direction orthogonal with axis center O), sectional area of the communication passage 62 becomes large corresponding thereto. Therefore, volume of the stopper portion 32 reduces and a spring constant in the axis direction reduces.

On the contrary, in the present embodiment, a part opposite to the convex surface 17 and the concave surface 18 in the axis direction within the bottom surface 62a (part positioned inner than the outer end portion of enlarged portion 13 in radial direction within bottom surface 62a) is formed into the shape as same as the convex surface 17 and the concave surface 18 with no load. That is, the outer part in the radial direction than the inflection point 16 in the bottom surface 62a is formed in a curved shape along the convex surface 17 (concave shape in a direction separating from convex surface 17) and the inner part in the radial direction than the inflection point 16 is formed in a curved shape along the concave surface 18 (convex shape toward concave surface 18). Therefore, within an area inner than the outer end portion of the enlarged portion 13 in the radial direction, facing clearance in the axis direction between the bottom surface 62a and both the convex surface 17 and concave surface 18 is set to a constant over outer side from the space S side (over outer side in radial direction (left side to right side in Fig. 6) from inner side in radial direction).

Thereby, the sectional area of the communication passage 62 to restrain closure of the communication passage 62 can be controlled to the minimum. Therefore, volume decrease of the stopper portion 32 can be restrained and a spring constant in the axis direction can be secured. Here, "radial direction" is defined as a direction with right angle to the axis center O and is used as the same meaning hereinafter.

Further, the part opposite to the convex surface 17 and the concave surface 18 in the axis direction within the bottom surface 62a is formed into the shape as same as the slanted surface 34a and the connection surface 34c with no load. That is, the separate size in the axis direction between the bottom surface 62a and both the slanted surface 34a and the connection surface 34c is set to a constant over outer side from the space S (over outer side in radial direction (left side to right side in Fig. 6) from inner side in radial direction). Thereby, in a case that the inner pipe 10 displaces to the one side in the axis direction (by receiving load from the convex surface 17) and the stopper portion 32 deforms toward the one side in the axis direction, compression allowance of the stopper portion 32 in the axis direction to the bottom surface 62 side from the slanted surface 34a and the connection surface 34c can be made constant over the outer side from the space S side.

That is, since rubber amount penetrating into the communication passage 62 according to deformation of the stopper portion 32 (deformation amount of a pair of side walls 62b) can be made constant over outer side from the space S, closure of the communication passage 62 due to deformation of the stopper portion 32 can be restrained (in a case that rubber amount getting into the communication passage 62 becomes large in some areas, the communication passage 62 is easy to be closed in such areas).

Next, constitution of the communication passage 62 will be further described with reference to Figs. 7A and 7B. Fig. 7A is a top view of the vibration isolation device 60 when seeing in a direction of arrow VIIA in Fig. 5 and Fig. 7B is a partially enlarged view of the vibration isolation device 60 when seeing in a direction of arrow VIIb in Fig. 7A.

As shown in Fig. 7A, a plurality of the communication passages 62 (four passages in the present embodiment) are formed at regular intervals in the circumference direction. Thereby, for example, even though the inner pipe 10 relatively displaces in prying direction against the outer pipe 20 and one communication passage 62 is closed, communicating state of the space S and outside can be maintained through the other communication passages 62. Therefore, since it can be restrained that the stopper portion 32 closely contacts with the enlarged portion 13 such as a suction cup, it can be restrained that abnormal sound occurs when such close contact is separated.

Here, when the inner pipe 10 relatively displaces in the one side in the axis direction (lower side in Fig. 7B) against the outer pipe 20 and load is added to the slanted surface 34a and the connection surface 34c from the convex surface 17 and the concave surface 18, the stopper portion 32 deforms in the circumference direction and a pair of side walls 62b are easy to deform so that mutual facing clearance of end portions of the pair of side walls 62b (for example, upper end portions of Fig. 7B) at the convex surface 17 side and the concave surface 18 side becomes narrow.

On the contrary, in the present embodiment, the facing clearance of the pair of side walls 62b is formed wider at the convex surface 17 side and the concave surface 18 side (for example, upper side than lower side in Fig. 7B) than the bottom surface 62a and the communication passage 62 is formed into trapezoid sectional shape. Therefore, even if the stopper portion 32 deforms so as to be widened in the circumference direction, it can be restrained that the pair of side walls 62b mutually contact. Thus, closure of the communication passage 62 according to deformation of the stopper portion 32 can be restrained.

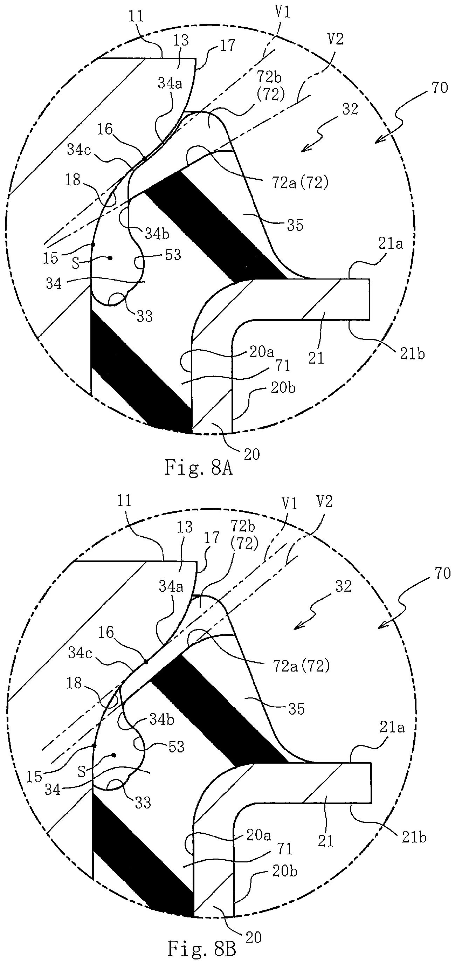

Next, a fourth embodiment will be described with reference to Figs. 8A and 8B. In the third embodiment, it is described a case that the facing clearance in the axis direction between the bottom surface 62a and both the convex surface 17 and the concave surface 18 is set to a constant over outer side from the space S side in the area of the inner circumference side than the end portion in radial direction of the enlarged portion 13. On the contrary, in the fourth embodiment, it will be described a case that the facing clearance in the axis direction between a bottom surface 72a and both the convex surface 17 and the concave surface 18 changes over outer side from the space S side. Here, as for the same portions as those in the third embodiment, the same references are attached and detailed description thereof will be omitted.

Fig. 8A is a partially enlarged view of a vibration isolation device 70 in the fourth embodiment and Fig. 8B is a partially enlarged view of the vibration isolation device 70 showing a state that the inner pipe 10 relatively displaces to one side in the axis direction against the outer pipe 20 from the state of Fig. 8A.

As shown in Figs. 8A and 8B, the vibration isolation device 70 possesses a vibration isolation body 71 constituted of rubber elastic body and connecting the inner pipe 10 and the outer pipe 20, and a communication passage 72 is formed in the stopper portion 32 of the vibration isolation body 71.

The communication passage 72 possesses a bottom surface 72a arranged opposite to the convex surface 17 and the concave surface 18 with a predetermined clearance therebetween and a pair of side walls 72b oppositely arranged in the circumference direction (vertical direction to sheet plane of Figs. 8A and 8B) and constituted as a plane extending toward the convex surface 17 and the concave surface 18 from the bottom surface 72a. The communication passage 72 is constituted as a concave groove with a trapezoid sectional shape in the slanted surface 34a and the connection surface 34c. A part opposite to the convex surface 17 and the concave surface 18 in the axis direction within the bottom surface 72a (part at least positioned inner side in radial direction than outer end portion in radial direction of enlarged portion 13) is formed in a plane. In the stopper potion 32, the recess portion 53 is formed similarly to the second embodiment.

In sectional view in a plane including axis center O, a tangent at a center position in the radial direction in a part contacting with the slanted surface 34a and the connection surface 34c within the convex surface 17 and the concave surface 18 is defined as an imaginary line V1 and a straight line along the bottom surface 72a is defined as an imaginary line V2. In the present embodiment, the imaginary line V2 is slanted against the imaginary line V1 with no load and facing clearance in the axis direction between the bottom surface 72a and both the convex surface 17 and the concave surface 18 is formed so as to become gradually wider over outer side from the space S side (over outer side in radial direction from inner side in radial direction (over right side from left side in Figs. 8A and 8B)).

Here, in a case that the inner pipe 10 relatively displaces to the one side in the axis direction (lower side of Fig. 8A) against the outer pipe 20 from a state with no load (state of Fig. 8A) and load is added to the slanted surface 34a and the connection surface 34c from the convex surface 17 and the concave surface 18, since the recess portion 53 is formed in the stopper portion 32, the stopper portion 32 deforms while making the recess portion 53 as a starting point so as to collapse toward inner side in the radial direction (see Fig. 8B).

In this case, to restrain that the communication passage 72 is closed when the stopper portion 32 deforms by receiving load from the convex surface 17 and the concave surface 18, it is necessary to form the bottom surface 72a in the axis direction at a position separated by a predetermined distance from the convex surface 17 and the concave surface 18. Therefore, for example, in a case that the bottom surface 72a is formed so that the imaginary line V1 and the imaginary line V2 become non-parallel when the stopper portion 32 deforms so as to collapse toward inner side in the radial direction, sectional area of the communication passage 72 becomes wider corresponding thereto and volume of the stopper portion 32 decreases. Therefore, the spring constant in the axis direction reduces.

On the contrary, in the present embodiment, since the facing clearance in the axis direction between the bottom surface 72a and both the convex surface 17 and the concave surface 18 is formed wider as going to outer side than the space S in the state with no load, in a case that the stopper portion 32 deforms so as to collapse toward inner side in the radial direction, the imaginary line V1 and the imaginary line V2 can be brought closer to the parallel state. Thereby, sectional area of the communication passage 72 can be decreased to restrain closure of the communication passage 72, therefore volume decrease of the stopper portion 32 can be restrained. Thus, the spring constant in the axis direction can be secured.

In the above, although the present invention is described based on the embodiments, the present invention is not limited to the above embodiments and it will be easily guessed that various improvements and modifications can be done within the scope of the present invention. For example, shapes of the inner pipe 10, the outer pipe 20, the vibration isolation body 30, 51 and the press tool 40 respectively show one example and various shapes thereof can be adopted.

In each of the embodiments, although it is described the case that the vibration isolation device 1, 50 is adopted to the suspension device in a car, it is not necessarily limited to this case. For example, it can be naturally done that the vibration isolation device is adopted to various uses each of which is demanded to restrain the relative displacement in the axis direction while restraining vibration transmission. Further, in addition to uses for a car, the vibration isolation device according to the present invention can be naturally adopted to various industrial apparatuses.

In each of the embodiments, although it is described the case that the enlarged portion 13 is formed at the first end surface 11 side of the inner pipe 10, it is not necessarily limited to this case. In addition to the enlarged portion 13 at the first end surface 11 side, the enlarged portion which is further enlarged as going to the second end surface 12 can be naturally formed at the second end surface 12 side of the inner pipe 10. Thereby, since the area of the second end surface 12 can be enlarged, surface pressure received by the second end surface 12 due to fastening to the partner member can be made small. As a result, cave-in of the partner member or buckle at the first end surface 11 side of the inner pipe 10 can be restrained.

In each of the embodiments, although it is described the case that the inner peripheral surface and the outer peripheral surface of the enlarged portion 13 is enlarged in a tapered shape as going to the first end surface 11, it is not necessarily limited to this case. It is conceivable a case that the outer peripheral surface of the enlarged portion 13 is enlarged in a tapered shape and a shape of the inner peripheral surface of the enlarged portion 13 may be voluntarily set. For example, the inner peripheral surface of the enlarged portion 13 is set so as to contract along the radial direction as going to the first end surface 11, thereby the area of the first end surface 11 can be further enlarged.

Furthermore, the outer peripheral surface of the enlarged portion 13 is not limited to the shape with the flection point 16 and the outline in the sectional plane including the central axis O can be made to a shape of straight line, convex, concave, combination of plurality of straight line, convex and concave. At that time, the slanted surface 34a can be formed to straight line or convex corresponding to the shape of the outer peripheral surface of the enlarged portion 13 in the axis direction.

In each of the embodiments, although it is described the case that force is added from the enlarged portion 13 to the slanted surface 34a formed in a shape corresponding to the shape of the outer peripheral surface of the enlarged portion 13 in the axis direction, it is not necessarily limited to this case. It is not necessary that the surface shape of the stopper portion 32, 52 to which force is added from the enlarged portion 13 corresponds to the enlarged portion 13. In this case, since the enlarged portion 13 enlarged in a tapered shape along the radial direction and the stopper portion 32, 52 smoothly contact according to relative displacement of the inner pipe 10 and the outer pipe 20, the load-bend curve in the axis direction can be gently raised.

In each of the embodiments, although it is described the case that the flection portion 21 is formed in the outer pipe 20, it is not necessarily limited to this case. The flection portion 21 can be naturally omitted. Further, it is not limited to the case that the flection portion 21 is bent at substantially right angle against the central axis O toward the outer side in the radial direction, and it is conceivable that the flection portion 21 is slanted toward the enlarged portion 13 within a range of 0° to 60° from the state that the flection portion 21 is bent at substantially right angle against the central axis O toward the outer side in the radial direction. In this case, since deformation to the outer side in the radial direction of the stopper portion 32, 52 can be restrained by the flection portion 21, it can be restrained that the stopper portion 32, 52 deforms to the outer side in the radial direction and the spring constant in the axis direction is lowered.

In the third embodiment, it is described a case that the mutual facing clearance between a pair of side walls 62b is formed wider in the convex surface 17 side than the bottom surface 62a and, in the fourth embodiment, description of the mutual facing clearance between a pair of side walls 72b is omitted. However, for example, in the area positioned at outer side in the radial direction than the enlarged portion 13, the mutual facing clearance between the pair of side walls 62b, 72b may be formed so as to become narrower in outer side than inner side in the radial direction.

That is, the part positioned in outer side in the radial direction than the enlarged portion 13 in the stopper portion 32 is relatively difficult to deform when load is received from the enlarged portion 13, mutual contact of the pair of side walls 62b, 72b is relatively difficult to occur (communication passage 62, 72 is difficult to close). Therefore, in the area positioned in outer side in the radial direction than the enlarged portion 13, based on that the mutual facing clearance between the pair of side walls 62b, 72b is formed narrower in outer side than inner side in the radial direction, it can be restrained that the communication passage 62, 72 is closed by the pair of side walls 62b, 72b while securing volume of the stopper portion 32 to the utmost and the spring constant in the axis direction.

Further, to restrain that the communication passage 62, 72 is closed, it may be formed protrusions protruded in the circumference direction from the pair of side walls 62b, 72b (protrusions are oppositely arranged in the circumference direction). Thereby, in a case that the stopper portion 32 deforms in a direction along which the pair of side walls 62b, 72b mutually approach, the protrusions formed in the pair of side walls 62b, 72b can be made mutually contact. That is, since it can be restrained that the pair of side walls 62b, 72b mutually make surface contact, it can be restrained that the communication passage 62, 72 is closed. Further, it may be conceivable constitution that a plurality of protrusions are provided.

In the third embodiment, although it is described a case that four communication passages 62 are formed at regular intervals in the circumference direction and, in the fourth embodiment, description of number of the communication passage 72 is omitted, number or arranging positions in the circumference direction of the communication passage 62, 72 can be set as appropriate. For example, it may be conceivable a constitution that one communication passage 62, 72 is formed and a constitution that more than two communication passages 62, 72 are formed. In a case that more than two communication passages are formed, it is preferable that such passages are arranged at regular intervals in the circumference direction. Thereby, for example, even if the inner pipe 10 displaces in the prying direction and one communication passage 62, 72 is closed, it can be retained the communication state between the space S and outside through the other communication passage(s) 62, 72. Further, based on that a plurality of communication passages 62, 72 are arranged at regular intervals in the circumference direction, the spring constant of the stopper portion 32 can be equalized.

Further, in a case that a plurality of communication passages 62, 72 are arranged at irregular intervals in the circumference direction, it is preferable that a plurality of communication passages 62, 72 are arranged at positions in each of which phase is shifted at least more than 30° in the circumference direction. Thereby, even if the inner pipe 10 displaces in the prying direction and one communication passage 62, 72 is closed, it can be retained the communication state between the space S and outside through the other communication passage(s) 62, 72.

In both the third embodiment and the fourth embodiment, although it is described a case that the communication passage 62, 72 has the bottom surface 62a, 72a and a pair of side walls 62b, 72b and is constituted as the recess groove with a trapezoid shape in a sectional view (in a side view), it is not necessarily limited to this. For example, the communication passage 62, 72 may be constituted as U-shaped sectional shape, V-shaped sectional shape or recess groove recessed in a rectangular shape. Further, it may be constituted the communication passage 62, 72 as a through hole penetrating in the stopper portion 32.

In the third embodiment and the fourth embodiment, although it is described a case that a pair of side walls 62b, 72b are formed in a plane, it is not necessarily limited to this. For example, such side walls may be constituted from a surface combined by a surface having a step (unevenness), a plane or curved surface.

In the fourth embodiment, although it is described a case that the tangent at the center position in the radial direction in the part contacting with the connection surface 34c and the slanted surface 34a within the convex surface 17 and the concave surface 18 is defined as the imaginary line V1 and the imaginary line V2 is slanted against the imaginary line V1 (the facing clearance in the axis direction between the bottom surface 72a and both the convex surface 17 and the concave surface 18 is formed wider over outer side from the space S side), it is not necessarily limited to this.

For example, among tangents at the part contacting with the connection surface 34c and the slanted surface 34a within the convex surface 17 and the concave surface 18, the tangent having the largest inclination angle against the axis direction is defines as the imaginary line V1 and the imaginary line V2 (bottom surface 72a) is slanted against at least the imaginary line V1, thereby the facing clearance in the axis direction between the bottom surface 72a and both the convex surface 17 and the concave surface 18 may be formed wider over outer side from the space S side. Thereby, in a case that the stopper portion 32 deforms so as to collapse toward the inner side in the radial direction, the imaginary line V2 can be approached in the parallel state with the imaginary line V1.

In the fourth embodiment, although it is described a case that the bottom surface 72a is constituted as a plane, it is not necessarily limited to this. For example, the bottom surface 72a may be constituted from a surface combined by a surface having a step (unevenness), a plane or curved surface. Therefore, for example, the shape of the bottom surface 72a in a state that the stopper portion 32 deforms so as to collapse toward the inner side in the radial direction may be formed into a shape as same as the shape of the convex surface 17 and the concave surface 18 facing in the axis direction. Thereby, since sectional area of the communication passage 72 can be restrained to the minimum, volume decrease of the stopper portion 32 can be restrained. Therefore, the spring constant in the axis direction can be secured.

### [Reference Signs List]

- 1, 50, 60, 70: vibration isolation device
- 10: inner pipe
- 13: enlarged portion
- 20: outer pipe
- 30, 51, 61, 71: vibration isolation body
- 32, 52: stopper portion
- 34a: slanted surface (contact surface)
- 34c: connection surface (contact surface)
- 62, 72: communication passage
- 62a, 72a: bottom surface
- 62b, 72b: side wall
- central axis: O
- space: S

## Claims

1. A vibration isolation device (1, 50, 60, 70) comprising:
an inner pipe (10) having an enlarged portion (13) enlarged in a tapered shape as going to an end portion in an axis direction;
an outer pipe (20) arranged at an outer side in a radial direction of the inner pipe (10) with a distance between the outer pipe (20) and the inner pipe (10);
a vibration isolation body (30, 51, 61, 71) made of rubber elastic body and connecting the inner pipe (10) and the outer pipe (20);
wherein the vibration isolation body (30, 51, 61, 71) protrudes toward the enlarged portion (13) between the inner pipe (10) and the outer pipe (20) and has a stopper portion (32, 52) restraining relative displacement of the inner pipe (10) against the outer pipe (20), and
wherein the stopper portion (32, 52) has a communication passage (62, 72) communicating a space (S) between an inner circumference side of the stopper portion (32, 52) and the inner pipe (10) with outside when the inner pipe (10) relatively displaces against the outer pipe (20) .

2. The vibration isolation device (1, 50, 60, 70) according to claim 1,
wherein the stopper portion (32, 52) has a contact surface (34a, 34c) constituted as a surface contacting with the enlarged portion (13) when the inner pipe (10) relatively displaces against the outer pipe (20), and
wherein the communication passage (62, 72) is formed as a recess groove recessed in the contact surface (34a, 34c) .

3. The vibration isolation device (1, 50, 60, 70) according to claim 2,
wherein a bottom surface (62a, 72a) of the communication passage (62, 72) is formed in a shape as same as an outer circumference surface of the enlarged portion (13), the outer circumference surface facing to the bottom surface (62a, 72a) in the axis direction.

4. The vibration isolation device (1, 50, 60, 70) according to claim 3,
wherein the contact surface (34a, 34c) is formed in the shape as same as the outer circumference surface of the enlarged portion (13), the outer circumference surface facing to the contact surface (34a, 34c) in the axis direction.

5. The vibration isolation device (1, 50, 60, 70) according to claim 2,
wherein the communication passage (62, 72) has a pair of side walls (62b, 72b) extending toward the enlarged portion (13) from the bottom surface (62a, 72a) and oppositely arranged in a circumference direction, and
wherein a facing clearance of the pair of side walls (62b, 72b) is formed wider as going to a side of the enlarged portion (13).

6. The vibration isolation device (1, 50, 60, 70) according to claim 2,
wherein the stopper portion (32, 52) is provided at a position facing to an outer circumference surface of the inner pipe (10) and has a recess portion (53) recessed toward an outer side of the inner pipe (10) in the radial direction, and
wherein a facing clearance in the axis direction between the bottom surface (62a, 72a) of the communication passage (62, 72) and an outer circumference surface of the enlarged portion (13) is formed so as to become gradually wider over the outer side in the radial direction from the space (S) side.

7. The vibration isolation device (1, 50, 60, 70) according to any one of claims 1 to 6,
wherein a plurality of the communication passages (62, 72) are formed at positions mutually separated in the circumference direction.
